# EUROPEAN PATENT SPECIFICATION

(11) **EP 3 832 010 B1**
(45) Date of publication and mention of the grant of the patent: **16.04.2025**
(21) Application number: 19844694.0
(22) Date of filing: 26.07.2019
(51) Int. Cl.: D06M 13/17, C08J 5/06, D06M 15/263, D06M 15/507, D06M 15/53, D06M 15/55, D06M 15/564, D06M 101/36, D06M 101/40

(54) **FIBER SIZE COMPOSITION, FIBER SIZE DISPERSION, FIBER SIZE SOLUTION, FIBER BUNDLE, FIBER PRODUCT, AND COMPOSITE MATERIAL**
FASERSCHLICHTEZUSAMMENSETZUNG, FASERSCHLICHTEDISPERSION, FASERSCHLICHTELÖSUNG, FASERBÜNDEL, FASERPRODUKT UND VERBUNDSTOFF
COMPOSITION DE TAILLE DE FIBRE, DISPERSION DE TAILLE DE FIBRE, SOLUTION DE TAILLE DE FIBRE, FAISCEAU DE FIBRES, PRODUIT À BASE DE FIBRES ET MATÉRIAU COMPOSITE

(30) Priority: 30.07.2018 JP 2018142519
(43) Date of publication of application: 09.06.2021
(73) Proprietor: Sanyo Chemical Industries, Ltd., Kyoto-shi, Kyoto 605-0995 (JP)
(72) Inventor: SAKAGUCHI, Sayaka, Kyoto-shi, Kyoto 605-0995 (JP)
(74) Representative: Mewburn Ellis LLP
(86) International application number: PCT/JP2019/029492
(87) International publication number: WO 2020/026991

(56) References cited:
- EP-A1- 3 196 351
- EP-A2- 1 652 996
- WO-A1-2013/146024
- CN-A- 102 776 786
- JP-A- 2003 138 485

## Description

### TECHNICAL FIELD

The present invention relates to a fiber sizing agent composition, a fiber sizing agent dispersion, a fiber sizing agent solution, a fiber bundle, a fiber product, and a composite material.

### BACKGROUND ART

Composite materials of various kinds of fibers and matrix resins such as unsaturated polyester resins, phenol resins, epoxy resins, and polypropylene resins are widely utilized in fields such as sports equipment, leisure equipment, and aircraft.

Examples of fibers used in these composite materials include glass fibers, carbon fibers, ceramic fibers, metal fibers, mineral fibers, rock fibers, and slag fibers. In order to prevent fluffing and/or end breakage, a sizing agent is usually applied to these fibers during processing into the composite materials (Patent Literature 1 and 2).

### CITATION LIST

### - Patent Literature

Patent Literature 1: WO 2013/146024 Patent Literature 2: EP 3196351 A1

### SUMMARY OF INVENTION

### - Technical Problem

However, while a sizing step of applying a sizing agent to fibers to provide fiber bundles involves penetration of a sizing solution (sizing agent) between fibers, the sizing solution (sizing agent) suggested in Patent Literature 1 does not sufficiently penetrate between fibers especially when fiber bundles contain many fibers, thus failing to sufficiently suppress fluffing and end breakage of fiber bundles.

The present invention aims to provide a fiber sizing agent composition capable of suppressing fluffing of fiber bundles.

### - Solution to Problem

As a result of studies to achieve the above aim, the present inventors arrived at the present invention.

Specifically, the present invention provides the followings: a fiber sizing agent composition containing an aliphatic alcohol alkylene oxide adduct (A) represented by the following formula (1), and a compound (B), wherein the compound (B) is at least one selected from the group consisting of a polyester (B1), a polyurethane (B2), an epoxy group-containing compound (B3), a (meth)acryloyl group-containing compound (B4), and a polyether compound (B5) other than the aliphatic alcohol alkylene oxide adduct (A); a fiber sizing agent dispersion containing the fiber sizing agent composition dispersed in water and/or an organic solvent; a fiber sizing agent solution containing the fiber sizing agent composition dissolved in water and/or an organic solvent; a fiber bundle containing at least one type of fibers selected from the group consisting of carbon fibers, glass fibers, aramid fibers, ceramic fibers, metal fibers, mineral fibers, and slag fibers, the fibers being treated with the fiber sizing agent composition; a fiber bundle containing at least one type of fibers selected from the group consisting of carbon fibers, glass fibers, aramid fibers, ceramic fibers, metal fibers, mineral fibers, and slag fibers, an aliphatic alcohol alkylene oxide adduct (A) represented by the following formula (1), and a compound (B'), wherein the compound (B') is at least one selected from the group consisting of a polyester (B1), a polyurethane (B2), an epoxy group-containing compound (B3), a (meth)acryloyl group-containing compound (B4), a polyether compound (B5) other than the aliphatic alcohol alkylene oxide adduct (A), a reaction product of the epoxy group-containing compound (B3), and a reaction product of the (meth)acryloyl group-containing compound (B4); a fiber product including the fiber bundle; and a composite material containing the fiber bundle and/or the fiber product, and a matrix resin:

R¹O(AO)ₘH (1)

in the formula (1), R¹ is a C8-C11 aliphatic hydrocarbon group having three or more methyl groups; AO is a C2-C4 alkyleneoxy group; and m represents the number average number of moles of alkylene oxide added and is 3 to 10.

### - Advantageous Effects of Invention

The fiber sizing agent composition of the present invention can suppress fluffing of fiber bundles.

### BRIEF DESCRIPTION OF DRAWINGS

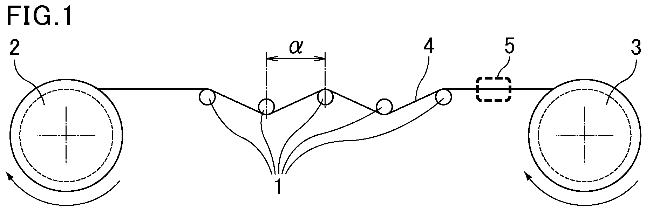

Fig. 1 is a schematic side view of arrangement of a carbon fiber bundle for evaluation of fluffing.

### DESCRIPTION OF EMBODIMENTS

The fiber sizing agent composition of the present invention contains an aliphatic alcohol alkylene oxide adduct (A) represented by the above formula (1) and a compound (B).

The compound (B) is at least one selected from the group consisting of a polyester (B1), a polyurethane (B2), an epoxy group-containing compound (B3), a (meth)acryloyl group-containing compound (B4), and a polyether compound (B5) other than the aliphatic alcohol alkylene oxide adduct (A) .

R¹ in the formula (1) is a C8-C11 aliphatic hydrocarbon group having three or more methyl groups.

The C8-C11 aliphatic hydrocarbon group may be a saturated aliphatic hydrocarbon group or an unsaturated aliphatic hydrocarbon group.

Examples of the C8-C11 aliphatic hydrocarbon group include aliphatic hydrocarbon groups having three methyl groups, aliphatic hydrocarbon groups having four methyl groups, and aliphatic hydrocarbon groups having five or more methyl groups.

Examples of the aliphatic hydrocarbon groups having three methyl groups include alkyl groups having three methyl groups (e.g., a 3-methylheptan-3-yl group, a 3,5-dimethylhexan-1-yl group, a 2-methylnonan-3-yl group, a 6-methylheptan-2-yl group, and a 2-methyldecan-2-yl group), alkenyl groups having three methyl groups (e.g., a 3,7-dimethyl-6-octen-1-yl group), and cycloalkyl group having three methyl groups (e.g., a 4-tert-butylcyclohexan-1-yl group).

Examples of the aliphatic hydrocarbon groups having four methyl groups include alkyl groups having four methyl groups (e.g., a 2,4-dimethylpentan-3-yl group, a 3,5,5-trimethylhexan-1-yl group, a 2,6-dimethylheptan-4-yl group, a 2,3,5-trimethylhexan-1-yl group, a 3,5,5-trimethylheptan-1-yl group, and a 3,5,5-trimethyloctan-1-yl group), alkenyl groups having four methyl groups (e.g., a 3,7-dimethyl-6-octen-2-yl group), and cycloalkyl group having four methyl groups (e.g., a 4-tert-butyl-2-methylcyclohexan-1-yl group).

Examples of the aliphatic hydrocarbon groups having five or more methyl groups include alkyl groups having five methyl groups (e.g., a 2,2-dimethyl-5-methylhexan-4-yl group), alkenyl group having five methyl groups (e.g., a 4,7,7-trimethyl-5-octen-2-yl group), and cycloalkyl group having five methyl groups (e.g., a 4-tert-butyl-2,6-dimethylcyclohexan-1-yl group).

The C8-C11 aliphatic hydrocarbon group is preferably an alkyl group or an alkenyl group, more preferably an alkyl group.

In each alcohol alkylene oxide adduct (A) that can be contained in the fiber sizing agent composition of the present invention, preferably, the number average number of methyl groups in R¹ is 3.5 or more in one molecule.

When the number average number of methyl groups is 3.5 or more, such a fiber sizing agent composition can further suppress fluffing of fiber bundles when applied to the fiber bundles. With such a number average number, it is also possible to improve impregnation of the fiber sizing agent composition with a matrix resin (described in detail later).

The number average number of methyl groups can be calculated, for example, by subjecting an alcohol having a hydroxy group bonded to R¹ of a raw material used to synthesize the aliphatic alcohol alkylene oxide adduct (A) (the synthesis method is described in detail later) to ¹H-NMR and gas chromatography.

When the carbon number of R¹ is less than 8 or more than 11, such a fiber sizing agent composition fails to sufficiently suppress fluffing of fiber bundles when applied to the fiber bundles.

Preferably, the carbon number of R¹ is 9 or more in order to further suppress fluffing of fiber bundles.

Preferably, the carbon number of R¹ is 10 or less in order to further suppress fluffing of fiber bundles and in view of the impregnation of the fiber sizing agent composition with a matrix resin (described in detail later).

In the formula (1), AO is a C2-C4 alkyleneoxy group, specifically, an oxyethylene group, a 1,2- or 1,3-oxypropylene group, or a 1,2-, 1,3-, 2,3- or 1,4-oxybutylene group.

The aliphatic alcohol alkylene oxide adduct (A) represented by the formula (1) contains m AOs, and these AOs may be of the same kind or different kinds.

In the formula (1), m represents the number average number of moles of alkylene oxide added and is 3 to 10.

When the number average number of moles of alkylene oxide added is less than 3, such a fiber sizing agent composition fails to sufficiently suppress fluffing of fiber bundles and has insufficient solubility in water.

When the number average number of moles of alkylene oxide added is more than 10, such a fiber sizing agent composition also fails to sufficiently suppress fluffing of fiber bundles.

Preferably, the number average number of moles of alkylene oxide added is 4 or more in order to further suppress fluffing of fiber bundles and in view of the impregnation of the fiber sizing agent composition with a matrix resin (described in detail later).

Preferably, the number average number of moles of alkylene oxide added is 7 or less in order to further suppress fluffing.

Preferably, the aliphatic alcohol alkylene oxide adduct (A) in the present invention contains a molecule having 3 to 10 alkyleneoxy groups.

In order to further suppress fluffing of fiber bundles and in view of the impregnation of the fiber sizing agent composition with a matrix resin (described in detail later), preferably, the aliphatic alcohol alkylene oxide adduct (A) contains a molecule having four or more alkyleneoxy groups.

In order to further suppress fluffing, preferably, the aliphatic alcohol alkylene oxide adduct (A) contains a molecule having seven or less alkyleneoxy groups.

In the present invention, examples of the aliphatic alcohol alkylene oxide adduct (A) include adducts of the following alkylene oxides with C8-C11 aliphatic alcohols: ethylene oxide (hereinafter sometimes abbreviated to "EO"), 1,2- or 1,3-propylene oxide (hereinafter sometimes abbreviated to "PO"), 1,2-, 1,3-, 2,3- or 1,4-butylene oxide (hereinafter sometimes abbreviated to "BO"), EO and PO in a random manner, EO and PO in a block manner, PO and EO in a block manner, EO and BO in a random manner, EO and BO in a block manner, and BO and EO in a block manner.

Preferred of these are adducts of EO with C8-C11 aliphatic alcohols and block adducts of PO-EO with C8-C11 aliphatic alcohols in order to suppress fluffing of fiber bundles treated with the fiber sizing agent composition. Adducts of EO alone with C8-C11 aliphatic alcohols are preferred in order to further suppress fluffing of fiber bundles and in view of the impregnation of the fiber sizing agent composition with a matrix resin (described in detail later).

In the aliphatic alcohol alkylene oxide adduct (A), the molar ratio of ethyleneoxy groups to propyleneoxy groups [mole number of ethyleneoxy groups:mole number of propyleneoxy groups] is preferably 100:0 to 70:30, more preferably 100:0 to 80:20, in order to suppress fluffing of fiber bundles and in view of the impregnation of the fiber sizing agent composition with a matrix resin.

In the present invention, one aliphatic alcohol alkylene oxide adduct (A) may be used alone or two or more thereof may be used in combination.

In the present invention, the number average molecular weight of the aliphatic alcohol alkylene oxide adduct (A) is preferably 260 to 892, more preferably 300 to 500, in order to suppress fluffing of fiber bundles.

The number average molecular weight is measured by gel permeation chromatography (hereinafter, GPC) at 40°C, using polyethylene oxide as a reference substance.

### (GPC measurement)

GPC measurement conditions are as follows.

### <GPC measurement conditions>

Model: HLC-8120 (available from Tosoh Corporation)
Column:
   TSK gel Super H4000
   TSK gel Super H3000
   TSK gel Super H2000
(all available from Tosoh Corporation)
Column temperature: 40°C
Detector: RI
Solvent: tetrahydrofuran
Flow rate: 0.6 ml/min
Sample concentration: 0.25 wt%
Amount to be injected: 10 µl
Reference substance: polyoxyethylene glycol
(TSK Standard Polyethylene Oxide available from Tosoh Corporation)
Data processor: SC-8020 available from Tosoh Corporation

Examples of the method of producing the aliphatic alcohol alkylene oxide adduct (A) include one in which a C2-C4 alkylene oxide (c) is added to a C8-C11 aliphatic alcohol (a), using catalysts such as an acid catalyst (d) and an alkaline catalyst (e).

Examples of the C8-C11 aliphatic alcohol (a) include an alcohol having a hydroxy group bonded to the R¹ having an aliphatic hydrocarbon group.

Specific examples of the C2-C4 alkylene oxide (c) include EO, PO, and BO.

Common methods can be used to add the C2-C4 alkylene oxide (c) to the C8-C11 aliphatic alcohol (a). For example, a method in which the reaction is carried out in two stages as described below is preferred in order to suppress odors.

The C9-C10 aliphatic alcohol (a) is fed into a pressurized reaction vessel, and is reacted at normal or increased pressure in the presence of the acid catalyst (d) while the C2-C4 alkylene oxide (c) (0.5 to 5 mol per mole of the aliphatic alcohol (a)) is blown thereinto. The reaction temperature is preferably 50°C to 200°C, and the reaction time is preferably 2 to 20 hours.

After completion of the addition reaction of the alkylene oxide (c), the catalyst is neutralized and treated with an adsorbent to remove the catalyst and to purify the reaction product, whereby an alkylene oxide adduct (A1) that is a precursor of the aliphatic alcohol alkylene oxide adduct (A) can be obtained.

The alkaline catalyst (e) is added to the thus-obtained alkylene oxide adduct (A1), and an additional alkylene oxide (c) that is the same as or different from the above alkylene oxide (c) is further addition-reacted in the same manner as described above, whereby the intended aliphatic alcohol alkylene oxide adduct (A) is obtained.

Examples of the acid catalyst (d) include perhalogen acid (perhalogenate), sulfuric acid (sulfate), phosphoric acid (phosphate), nitric acid (nitrate), and perfluoroalkyl sulfonic acid metal salts. A metal to form a salt is not limited, but it is preferably a divalent or trivalent metal.

Examples of the divalent or trivalent metal include Mg, Ca, Sr, Ba, Zn, Co, Ni, Cu, Al, Cd, Ti, Hf, Cr, Mo, Mn, Fe, Pd, and rare earth elements. More preferred are Mg, Zn, Ca, Sr, Ba, Al, Cu, Cd, Ti, Cr, Fe, or a rare earth atom, and particularly prefer Mg, Zn, Al, Ti, Fe, or Sc.

Examples of halogens in perhalogen acid (perhalogenate) include chlorine, bromine, and iodine. Chlorine is preferred.

Preferred examples of the perfluoroalkyl sulfonic acid metal salts are trifluoromethanesulfonate and pentafluoroethanesulfonate. More preferred is scandium triflate.

The acid catalyst (d) is preferably a perchlorate of a divalent or trivalent metal or a perfluoroalkyl sulfonic acid metal salt, more preferably a perchlorate of a metal selected from Mg, Zn, or Al, trifluoromethanesulfonate, or pentafluoroethanesulfonate, particularly preferably magnesium perchlorate, zinc perchlorate, aluminum perchlorate, or scandium triflate.

In the case where the reaction is carried out in two stages as described above, the amount of the acid catalyst (d) used is preferably 0.001 to 1 wt% based on the weight of the alkylene oxide adduct (A1), in view of the reaction rate and economic efficiency. The amount is more preferably 0.003 to 0.8 wt%, particularly preferably 0.005 to 0.5 wt%.

Examples of the alkaline catalyst (e) include hydroxides and alkoxides (e.g., methoxide, ethoxide, propoxide, and butoxide) of alkaline metals and alkaline earth metals (e.g., lithium, sodium, potassium, cesium, magnesium, calcium, and barium), tertiary amines (e.g., triethylamine and trimethylamine), and quaternary ammonium salts (e.g., tetramethylammonium hydroxide). Preferred of these are potassium hydroxide, sodium hydroxide, and cesium hydroxide.

In the case where the reaction is carried out in two stages as described above, the amount of the alkaline catalyst (e) used is preferably 0.0001 to 1 wt% based on the weight of the aliphatic alcohol alkylene oxide adduct (A), in view of the reaction rate and economic efficiency. The amount is more preferably 0.001 to 0.5 wt%.

In the fiber sizing agent composition of the present invention, the compound (B) is at least one selected from the group consisting of the polyester (B1), the polyurethane (B2), the epoxy group-containing compound (B3), the (meth)acryloyl group-containing compound (B4), and the polyether compound (B5) other than the aliphatic alcohol alkylene oxide adduct (A).

One compound (B) may be used alone or two or more thereof may be used in combination.

The term "(meth)acryloyl" means acryloyl and/or methacryloyl, and the term "(meth)acrylate" means acrylate and/or methacrylate.

Examples of the polyester (B1) include reaction products of diols and dicarboxylic acids or dicarboxylic acid anhydrides, lactone ring-opening polymers, and polyhydroxycarboxylic acids.

Examples of the diols include C2-C30 aliphatic alkanediols (ethylene glycol, propylene glycol, butanediol, and neopentyl glycol), adducts of C2-C4 alkylene oxide with C2-C30 aliphatic alkanediols, adducts of alkylene oxide with primary alkylamines (preferably, those having 1 to 20 carbon atoms, specifically, methylamine, ethylamine, propylamine, octylamine, dodecylamine, and the like), and adducts of alkylene oxide with aromatic ring-containing dihydric phenols (preferably, those having 6 to 20 carbon atoms, specifically, bisphenol A, bisphenol S, cresol, and the like). These diols may be used alone or in combination of two or more.

The number average number of moles of alkylene oxide added is preferably 2 to 100 mol per mole of the diols, primary alkylamines, or aromatic ring-containing dihydric phenols.

The dicarboxylic acids may be C2-C24 dicarboxylic acids. Specific examples thereof include C2-C24 saturated aliphatic dicarboxylic acids (e.g., oxalic acid, malonic acid, succinic acid, adipic acid, and sebacic acid), C2-C24 unsaturated aliphatic carboxylic acids (e.g., maleic acid and fumaric acid), and C2-C24 aromatic dicarboxylic acids (e.g., phtalic acid, terephthalic acid, and isophtalic acid).

Examples of the dicarboxylic acid anhydrides include C2-C24 dicarboxylic acid anhydrides (e.g., maleic anhydride and phthalic anhydride).

Examples of the lactone ring-opening polymers include those obtained by ring-opening polymerization of lactons such as C3-C12 monolactones (having one ester group in the ring) (e.g., β-propiolactone, γ-butyrolactone, δ-valerolactone, and ε-caprolactone) using catalysts such as a metal oxide and an organometallic compound.

Examples of the polyhydroxycarboxylic acids include those obtained by dehydration condensation of hydroxycarboxylic acids (e.g., glycolic acid and lactic acid).

Examples of the polyurethane (B2) include those derived from a polyol, an organic diisocyanate, and, if necessary, a chain extender and/or crosslinking agent.

Examples of the polyol include polyester polyols (e.g., polyethylene adipate diol, polybutylene adipate diol, polyethylene butylene adipate diol, polyneopentyl adipate diol, polyneopentyl terephthalate diol, polycaprolactone diol, polyvalerolactone diol, and polyhexamethylene carbonate diol); and polyether polyols (e.g., polyethylene glycol, polypropylene glycol, polyethylene propylene glycol, polytetramethylene glycol, and adducts of C2-C4 alkylene oxide with bisphenols).

Preferably, the number average molecular weight of the polyol is 40 to 4000.

Specific examples of the organic diisocyanate include C8-C30 aromatic diisocyanates (e.g., 2,4'- or 4,4'-diphenylmethane diisocyanate (MDI), 2,4- or 2,6-tolylene diisocyanate (TDI), 4,4'-dibenzyl diisocyanate, 1,3- or 1,4-phenylene diisocyanate, 1,5-naphthylene diisocyanate, and xylylene diisocyanate); C4-C30 aliphatic diisocyanates (e.g., ethylene diisocyanate, hexamethylene diisocyanate (HDI), and lysine diisocyanate); C6-C30 alicyclic diisocyanates (e.g., isophorone diisocyanate (IPDI) and 4,4'-dicyclohexylmethane diisocyanate); and mixtures of two or more of these.

The epoxy group-containing compound (B3) is, for example, a compound having one or more epoxy groups in one molecule. Specific examples thereof include glycidyl ether, diglycidyl ester, diglycidyl amine, and alicyclic diepoxide.

Examples of the glycidyl ether include diglycidyl ethers of dihydric phenols, glycidyl ethers of monohydric alcohols, and diglycidyl ethers of dihydric alcohols.

Examples of the diglycidyl ethers of dihydric phenols include condensates (including polycondensates) of C6-C30 dihydric phenols and epichlorohydrin, terminated with diglycidyl ether at both ends. Examples of the C6-C30 dihydric phenols include bisphenols (e.g., bisphenol F, bisphenol A, bisphenol B, bisphenol AD, bisphenol S, and halogenated bisphenol A), catechin, resorcinol, hydroquinone, 1,5-dihydroxynaphthalene, dihydroxybiphenyl, octachloro-4,4'-dihydroxybiphenyl, tetramethylbiphenyl, and 9,9'-bis(4-hydroxyphenyl) fluorene.

Examples of the glycidyl ethers of monohydric alcohols include condensates of C1-C30 monohydric alcohols and epichlorohydrin, terminated with glycidyl ether. Examples of the C1-C30 monohydric alcohols include methanol, ethanol, butanol, hexanol, cyclohexanol, octanol, dodecyl alcohol, tetradecyl alcohol, stearyl alcohol, icosyl alcohol, behenyl alcohol, tetracosyl alcohol, and triacontyl alcohol.

Examples of diglycidyl ethers of dihydric alcohols include condensates (including polycondensates) of C2-C100 dihydric alcohols and epichlorohydrin, terminated with diglycidyl ether. Examples of the C2-C100 dihydric alcohols include ethylene glycol, propylene glycol, tetramethylene glycol, 1,6-hexanediol, neopentyl glycol, polyethylene glycol having a number average molecular weight (hereinafter, abbreviated to "Mn") of 106 to 1932, polypropylene glycol having an Mn of 134 to 5818, polytetramethylene etherglycol having an Mn of 162 to 1818, and adducts of C2-C4 alkylene oxide (1 to 21 mol) with bisphenol A.

Regarding the diglycidyl ethers (diglycidyl ethers of dihydric phenols and diglycidyl ethers of dihydric alcohols), the molar ratio of dihydric phenol units or dihydric alcohol units to epichlorohydrin units in the diglycidyl ether ((dihydric phenol units or dihydric alcohol units): (epichlorohydrin units)) is represented by n:n + 1. Herein, n is preferably 1 to 10, more preferably 1 to 8, particularly preferably 1 to 5. The diglycidyl ethers may be mixtures in which n = 1 to 10 (e.g., mixtures of components having different degrees of polycondensation).

Examples of the diglycidyl ester include diglycidyl esters of C8-C20 aromatic dicarboxylic acids and diglycidyl esters of C2-C20 aliphatic dicarboxylic acids.

Examples of the diglycidyl esters of C8-C20 aromatic dicarboxylic acids include condensates (including polycondensates) of C8-C20 aromatic dicarboxylic acids and epichlorohydrin, having two glycidyl groups.

Examples of the C8-C20 aromatic dicarboxylic acids include phtalic acid, isophtalic acid, terephthalic acid, phenylmalonic acid, homophthalic acid, phenylsuccinic acid, phenylglutaric acid, phenyladipic acid, biphenyldicarboxylic acid, and naphthalenecarboxylic acid.

Examples of the diglycidyl esters of C2-C20 aliphatic dicarboxylic acids include condensates (including polycondensates) of C2-C20 aliphatic dicarboxylic acids and epichlorohydrin, having two glycidyl groups.

Examples of the C2-C20 aliphatic dicarboxylic acids include oxalic acid, fumaric acid, maleic acid, citraconic acid, itaconic acid, glutaconic acid, succinic acid, adipic acid, azelaic acid, sebacic acid, dodecanedioic acid, tetradecanedioic acid, hexadecanedioic acid, octadecanedioic acid, and icosanedioic acid.

Regarding the diglycidyl ester, the molar ratio of aromatic dicarboxylic acid units or aliphatic dicarboxylic acid units to epichlorohydrin units ((aromatic dicarboxylic acid units or aliphatic dicarboxylic acid unit): (epichlorohydrin units)) is presented by n:n + 1. Herein, n is preferably 1 to 10, more preferably 1 to 8, particularly preferably 1 to 5. The diglycidyl ester may be a mixture in which n = 1 to 10.

Examples of the diglycidyl amine include N-glycidyl compounds obtained by reaction of a C6-C20 aromatic amine having two to four active hydrogen atoms with epichlorohydrin (e.g., N,N-diglycidylaniline and N,N-diglycidyltoluidine).

Examples of the C6-C20 aromatic amine having two to four active hydrogen atoms include aniline, phenylenediamine, tolylenediamine, and toluidine.

Regarding the diglycidyl amine, the molar ratio of aromatic amine units to epichlorohydrin units ((aromatic amine units): (epichlorohydrin units)) is represented by n:n + 1. Herein, n is preferably 1 to 10, more preferably 1 to 8, particularly preferably 1 to 5. The diglycidyl amine may be a mixture in which n = 1 to 10.

Examples of the alicyclic diepoxide include C6-C50 alicyclic epoxides having two epoxy groups (e.g., vinylcyclohexene dioxide, limonene dioxide, dicyclopentadiene dioxide, bis(2,3-epoxycyclopentyl)ether, ethylene glycol bisepoxydicyclopentyl ether, bis(3,4-epoxy-6-methylcyclohexylmethyl)adipate, and bis(3,4-epoxy-6-methylcyclohexylmethyl)butylamine).

Preferred of these are diglycidyl ethers, more preferred are diglycidyl ethers of aromatic dihydric alcohols, particularly preferred are bisphenol diglycidyl ethers, and most preferred are bisphenol A diglycidyl ethers (bisphenol A epoxy resins), in view of the strength of a molded article of a composite material produced by using the fiber sizing agent composition, for example.

Examples of the (meth)acryloyl group-containing compound (B4) include thermoplastic resins modified with a (meth)acrylate, and vinyl ester resins.

Examples of the thermoplastic resins modified with a (meth)acrylate include modified products obtained by modification of hydroxy groups of thermoplastic resins having alcoholic hydroxy groups (e.g., polyurethanes, polyesters, and polyethers (e.g., polypropylene glycol and polyethylene glycol)) with (meth)acrylic acid. Examples thereof include polyurethane (di-/mono-) (meth)acrylates, polyester (di-/mono-) (meth)acrylates, and polyether (di- /mono-) (meth)acrylates. The term "(di-/mono-) (meth)acrylate" means a di(meth)acrylate and/or a mono(meth)acrylate.

Examples of the vinyl ester resins include bisphenol epoxy resins modified with a (meth)acrylate (e.g., resins terminally modified with a (meth)acrylate, obtained by reaction of epoxy groups of bisphenol A epoxy resin with carboxyl groups of (meth)acrylic acid).

Examples of the polyether compound (B5) other than the aliphatic alcohol alkylene oxide adduct (A) include adducts of C2-C4 alkylene oxide with a compound having a C1-C20 active hydrogen group, and sulfate ester salts thereof.

The active hydrogen group means a group having a highly reactive hydrogen atom bonded to a highly electronegative atom (e.g., oxygen or nitrogen). Examples thereof include a hydroxy group, an amino group, a carboxy group, a thiol group, and a phosphoric acid group.

Examples of the compound having a C1-C20 active hydrogen group include the C2-C30 aliphatic alkanediols, primary alkylamines, and aromatic ring-containing dihydric phenols, exemplified in the description of the polyester (B1). Examples of usable compounds other than the compounds described above include C2-C30 monohydric alcohols (e.g., methanol, ethanol, icosanol, cyclohexanol, and oleyl alcohol) and phenols.

Of these polyether compounds (B5), preferred are adducts of alkylene oxide with phenols (e.g., bisphenol A, bisphenol S, and cresol), adducts of alkylene oxide with alkyl (preferably, C9-C15 alkyl group) phenols, adducts of alkylene oxide with arylalkyl (preferably, C2-C10 alkyl group) phenols (e.g., styrenated phenol, styrenated cumylphenol, and styrenated cresol), sulfate ester salts of adducts of alkylene oxide with the alkylphenols, sulfate ester salts of adducts of alkylene oxide with the arylalkylphenols, and mixtures of these; and more preferred are adducts of alkylene oxide with the arylalkylphenols, sulfate ester salts of adducts of alkylene oxide with the arylalkylphenols, and mixtures of these.

The number of moles of alkylene oxide added in the polyether compound (B5) is preferably 2 to 100 mol, in view of the water solubility and emulsification properties of the fiber sizing agent composition, as well as the fiber spreadability and sizing properties of fiber bundles treated with the fiber sizing agent composition.

In particular, the polyester (B1), the epoxy group-containing compound (B3), and the (meth)acryloyl group-containing compound (B4) are preferred, and the polyester (B1) and the epoxy group-containing compound (B3) are more preferred, in view of the strength of a composite material produced by using the fiber sizing agent composition.

The compound (B) is preferably a combination of the polyester (B1) and the epoxy group-containing compound (B3), or a combination of the polyester (B1) and the (meth)acryloyl group-containing compound (B4), more preferably a combination of the polyester (B1) and the epoxy group-containing compound (B3), in order to further increase the strength of a composite material produced by using the fiber sizing agent composition.

Preferably, the polyether compound (B5) is further used in combination in order to further suppress fluffing of fiber bundles.

The weight ratio of the aliphatic alcohol alkylene oxide adduct (A) to the compound (B) [(A)/(B)] is preferably 0.1/99.9 to 60/40, more preferably 1/99 to 50/50, particularly preferably 5/95 to 40/60, in view of the good balance between the sizing properties of fiber bundles and the strength of a composite material produced by using the fiber sizing agent composition.

The fiber sizing agent composition of the present invention may contain a surfactant (C) that is a compound other than the aliphatic alcohol alkylene oxide adduct (A) and the compound (B).

With the presence of the surfactant (C), the sizing agent attached to fibers tends to be smooth, and thus can further suppress fluffing of fiber bundles.

The presence of the surfactant (C) is also preferred because it makes it easy to produce an aqueous emulsion containing only a small amount of an organic solvent, in a fiber sizing agent dispersion (described later).

The surfactant (C) may be a nonionic surfactant, an anionic surfactant, a cationic surfactant, or an amphoteric surfactant, for example.

Examples of such surfactants include alkyl glycosides (e.g., decyl glucoside) and alkylbenzene sulfonates (e.g., sodium dodecylbenzenesulfonate).

One surfactant (C) may be used alone or two or more thereof may be used in combination.

The surfactant (C) is more preferably an anionic surfactant or a nonionic surfactant in order to easily produce an aqueous emulsion.

The fiber sizing agent composition of the present invention may contain additives, if necessary. Examples of the additives include smoothing agents, preservatives, and antioxidants.

Examples of the smoothing agents include waxes (e.g., polyethylene, polypropylene, oxidized polyethylene, oxidized polypropylene, modified polyethylene, and modified polypropylene), esters of higher fatty acid (C12-C24) alkyl (C1-C24) (e.g., methyl stearate, ethyl stearate, propyl stearate, butyl stearate, octyl stearate, and stearyl stearate), and higher fatty acids (C12-C24) (e.g., myristic acid, palmitic acid, and stearic acid).

Examples of the preservatives include benzoic acids, salicylic acids, sorbic acids, quaternary ammonium salts, and imidazoles.

Examples of the antioxidants include phenols (e.g., 2,6-di-t-butyl-p-cresol), thiodipropionates (e.g., dilauryl 3,3'-thiodipropionate), and phosphites (e.g., triphenylphosphite).

The amount of the aliphatic alcohol alkylene oxide adduct (A) is preferably 1 wt% or more, more preferably 5 wt% or more, based on the total weight of the fiber sizing agent composition, in view of the sizing properties of fiber bundles and in order to suppress fluffing.

The amount of the aliphatic alcohol alkylene oxide adduct (A) is preferably 40 wt% or less, more preferably 20 wt% or less, particularly preferably 10 wt% or less, based on the total weight of the fiber sizing agent composition, in view of the sizing properties and in order to suppress fluffing of fiber bundles and in view of the impregnation of the fiber sizing agent composition with a matrix resin (described in detail later).

The amount of the compound (B) is preferably 60 wt% or more, more preferably 80 wt% or more, particularly preferably 90 wt% or more, based on the total weight of the fiber sizing agent composition, in view of the strength of a composite material produced by using the fiber sizing agent composition.

The amount of the compound (B) is preferably 99 wt% or less, more preferably 95 wt% or less, based on the total weight of the fiber sizing agent composition, in order to suppress fluffing of fiber bundles.

When the fiber sizing agent composition of the present invention contains the polyether compound (B5), preferably, the weight ratio of the aliphatic alcohol alkylene oxide adduct (A) to the polyether compound (B5) excluding the polyester (B1), the polyurethane (B2), the epoxy group-containing compound (B3), and the (meth)acryloyl group-containing compound (B4) [weight of (A)/weight of (B5)] is 5/95 to 60/40, in order to suppress fluffing of fiber bundles and in view of the emulsification stability of the fiber sizing agent composition.

The amount of the surfactant (C) (when used) is preferably 0.5 to 30 wt%, more preferably 1 to 20 wt%, particularly preferably 2 to 15 wt%, based on the total weight of the fiber sizing agent composition, in view of the sizing properties of fiber bundles.

The fiber sizing agent composition of the present invention may be produced by any method. For example, the aliphatic alcohol alkylene oxide adduct (A), the compound (B), and, if necessary, the surfactant (C), and other additives are added in any order to a mixing container, and stirred preferably at 20°C to 150°C, more preferably 50°C to 120°C, until a uniform mixture is obtained.

The fiber sizing agent dispersion of the present invention contains the fiber sizing agent composition of the present invention dispersed in a solvent.

The fiber sizing agent solution of the present invention contains the fiber sizing agent composition of the present invention dissolved in a solvent.

The fiber sizing agent composition being dissolved or dispersed in a solvent makes it easy to suitably adjust the amount of the fiber sizing agent composition to be attached to fiber bundles.

Examples of the solvent include water and organic solvents.

Examples of the organic solvents include C1-C4 monohydric alcohols (e.g., methanol, ethanol, and isopropanol), C3-C6 ketones (e.g., acetone, ethyl methyl ketone, and methyl isobutyl ketone), C2-C6 glycols (e.g., ethylene glycol, propylene glycol, diethylene glycol, and triethylene glycol), mono-lower alkyl (alkyl having a carbon number of 1 to 4) ethers of these, dimethylformamide, aromatic hydrocarbons (e.g., toluene and xylene), and C3-C5 acetic acid alkyl esters (e.g., methyl acetate and ethyl acetate).

These solvents may be used alone or in combination of two or more. Of these solvents, preferred are water and a solvent mixture of water and a water-miscible organic solvent (an organic solvent that can be uniformly mixed with water when mixed at a volume ratio of 1:1 at 25°C), and more preferred is water in view of safety such as fire prevention.

In view of the cost and the like, preferably, the fiber sizing agent dispersion and the fiber sizing agent solution of the present invention are of high concentration during distribution and are of low concentration during production of fiber bundles. Specifically, high concentrations during distribution make it possible to reduce the transport cost, storage cost, and the like, while low concentrations for fiber treatment make it possible to produce fiber bundles with a good balance between excellent sizing properties and excellent fiber spreadability.

When the fiber sizing agent dispersion and the fiber sizing agent solution are of high concentrations, the concentration (the weight percentage of the components excluding the solvent(s)) is preferably 30 to 80 wt%, more preferably 40 to 70 wt%, in view of the storage stability and the like.

When the fiber sizing agent dispersion and the fiber sizing agent solution are of low concentrations, the concentration is preferably 0.5 to 15 wt%, more preferably 1 to 10 wt%, in order to suitably adjust the amount of the fiber sizing agent to be attached to fiber bundles during production of the fiber bundles.

The fiber sizing agent dispersion and the fiber sizing agent solution of the present invention may be produced by any method, such as one in which a solvent is added to the fiber sizing agent composition of the present invention to dissolve or to emulsify and disperse the fiber sizing agent composition in the solvent.

The temperature at which the fiber sizing agent composition is dissolved or is emulsified and dispersed in the solvent is preferably 20°C to 90°C, more preferably 40°C to 90°C, in order to facilitate mixing.

The duration in which the fiber sizing agent composition is dissolved or is emulsified and dispersed in the solvent is preferably 1 to 20 hours, more preferably 2 to 10 hours.

The fiber sizing agent composition can be dissolved or can be emulsified and dispersed in an aqueous medium by a known mixer, a dissolver, or an emulsifier disperser. Specific examples thereof include stirring blades (blade shape: ore, three blade paddle, or the like), Nauta mixers available from Hosokawa Micron Corporation and the like, ribbon mixers, conical blenders, mortar mixers, universal mixers (e.g., a universal mixer and stirrer "5DM-L" available from San-ei Manufacturing Co., Ltd.), and Henschel mixers available from Nippon Coke & Engineering Co., Ltd. and the like. An autoclave or the like can also be used.

Examples of fibers to which the fiber sizing agent composition, fiber sizing agent dispersion, or fiber sizing agent solution of the present invention is applicable include inorganic fibers (e.g., glass fibers, carbon fibers, ceramic fibers, metal fibers, mineral fibers, and slag fibers) and organic fibers (e.g., aramid fibers). Of these, carbon fibers are preferred in view of the strength of a molded article of a composite material produced by using the fiber sizing agent composition and fibers.

The fiber bundle of the present invention is a fiber bundle of at least one type of fibers selected from the group consisting of carbon fibers, glass fibers, aramid fibers, ceramic fibers, metal fibers, mineral fibers, and slag fibers, the fibers being treated with the fiber sizing agent composition.

The fiber bundle of the present invention includes at least one type of fibers selected from the group consisting of carbon fibers, glass fibers, aramid fibers, ceramic fibers, metal fibers, mineral fibers, and slag fibers;
the aliphatic alcohol alkylene oxide adduct (A) represented by the formula (1); and
a compound (B'),

R¹O(AO)ₘH (1)

in the formula (1), R¹ is a C8-C11 aliphatic hydrocarbon group having three or more methyl groups; AO is a C2-C4 alkyleneoxy group; and m represents the number average number of moles of alkylene oxide added and is 3 to 10.

Here, the compound (B') is at least one selected from the group consisting of a polyester (B1), a polyurethane (B2), an epoxy group-containing compound (B3), a (meth)acryloyl group-containing compound (B4), a polyether compound (B5) other than the aliphatic alcohol alkylene oxide adduct (A), a reaction product of the epoxy group-containing compound (B3), and a reaction product of the (meth)acryloyl group-containing compound (B4).

The polyester (B1), the polyurethane (B2), the epoxy group-containing compound (B3), the (meth)acryloyl group-containing compound (B4), and the polyether compound (B5) other than the aliphatic alcohol alkylene oxide adduct (A) as the compounds (B') are the same as the polyester (B1), the polyurethane (B2), the epoxy group-containing compound (B3), the (meth)acryloyl group-containing compound (B4), and the polyether compound (B5), respectively, exemplified in the description of the fiber sizing agent composition of the present invention, and preferred compounds of these are also as exemplified above.

The reaction product of the epoxy group-containing compound (B3) and the reaction product of the (meth)acryloyl group-containing compound (B4) refer to compounds obtained by chemical alteration of the epoxy group-containing compound (B3) and the (meth)acryloyl group-containing compound (B4), respectively contained in the fiber sizing agent composition, caused by heat treatment or the like during production of the fiber bundle of the present invention.

Examples of the reaction product of the epoxy group-containing compound (B3) include polymers (dimers and larger polymers) containing the epoxy group-containing compound (B3) as an essential structural unit, reaction products of the epoxy group-containing compound (B3) and carbon fibers, and reaction products of polymers containing the epoxy group-containing compound (B3) as an essential structure unit and carbon fibers.

Examples of the reaction product of the (meth)acryloyl group-containing compound (B4) include polymers (dimers and larger polymers) containing the (meth)acryloyl group-containing compound (B4) as an essential structure unit.

The amount of the aliphatic alcohol alkylene oxide adduct (A) is preferably 0.01 wt% or more, more preferably 0.07 wt% or more, based on the weight of the fiber bundle of the present invention, in view of the sizing properties of the fiber bundle and in order to suppress fluffing.

The amount of the aliphatic alcohol alkylene oxide adduct (A) is preferably 1 wt% or less, more preferably 0.3 wt% or less, particularly preferably 0.15 wt% or less, based on the weight of the fiber bundle of the present invention, in view of the sizing properties and suppression of fluffing of fiber bundles and in view of the impregnation of the fiber sizing agent composition with a matrix resin (described in detail later).

When the fiber bundle of the present invention contains the polyether compound (B5), preferably, the weight ratio of the aliphatic alcohol alkylene oxide adduct (A) to the polyether compound (B5) excluding the polyester (B1), the polyurethane (B2), the epoxy group-containing compound (B3), and the (meth)acryloyl group-containing compound (B4) [weight of (A)/weight of (B5)] is 5/95 to 60/40 in order to suppress fluffing of fiber bundles and in view of the emulsification stability of the fiber sizing agent composition.

The amount of the surfactant (C) (when used) is preferably 0.001 to 0.9 wt%, more preferably 0.002 to 0.6 wt%, particularly preferably 0.004 to 0.45 wt%, based on the weight of the fiber bundle, in view of the sizing properties of fiber bundles.

Examples of the method of producing the fiber bundle of the present invention include treating at least one type of fibers selected from the group consisting of carbon fibers, glass fibers, aramid fibers, ceramic fibers, metal fibers, mineral fibers, and slag fibers, with the fiber sizing agent composition of the present invention, the fiber sizing agent dispersion of the present invention, or the fiber sizing agent solution of the present invention.

Preferably, the fiber bundle of the present invention is a bundle of 3000 to 50000 fibers.

Even when the fiber bundle of the present invention contains many fibers (20000 or more), fluffing can be sufficiently suppressed.

Examples of the method of treating fibers include spraying and immersion. The amount of the fiber sizing agent composition attached to fibers is preferably 0.05 to 5 wt%, more preferably 0.2 to 2.5 wt%, based on the weight of the fibers. When the amount of the fiber sizing agent composition attached is in the above ranges, the fiber sizing agent composition can impart excellent sizing properties.

The fiber product of the present invention is made of the fiber bundle. Examples thereof include fiber products obtained by processing the fiber bundle, such as woven fabrics, knitted fabrics, nonwoven fabrics (e.g., felt, mats, and paper), chopped fibers, and milled fibers.

The composite material of the present invention contains the fiber bundle of the present invention and/or the fiber product of the present invention, and a matrix resin. The composite material of the present invention may contain catalysts, if necessary.

When the matrix resin is a thermosetting resin (described later), the composite material of the present invention may contain a reaction product of the thermosetting resin and the compound (B') (e.g., the epoxy group-containing compound (B3) and the (meth)acryloyl group-containing compound (B4)) contained in the fiber bundle and the fiber product of the present invention.

Examples of the matrix resin include thermoplastic resins (e.g., polypropylene, polyamide, polyethylene terephthalate, polycarbonate, and polyphenylene sulfide) and thermosetting resins (the epoxy group-containing compound (B3), unsaturated polyester resins (e.g., one described in JP 3723462 B), the vinyl ester resins, and phenolic resins (e.g., one described in JP 3723462 B)).

Examples of catalysts for the epoxy group-containing compound (B3) include curing agents and curing accelerators for epoxy resins, which are publicly known (e.g., one described in JP 2005-213337 A).

Examples of catalysts for the unsaturated polyester resins and the vinyl ester resins include peroxides (e.g., benzoyl peroxide, t-butyl perbenzoate, t-butylcumyl peroxide, methyl ethyl ketone peroxide, 1,1-di(t-butylperoxy)butane, and di(4-t-butyl cyclohexyl)peroxydicarbonate), and azo compounds (e.g., azobisisovaleronitrile).

In the composite material of the present invention, the weight ratio of the matrix resin to the fiber bundle and/or fiber product (matrix resin/fiber bundle) is preferably 10/90 to 90/10, more preferably 20/80 to 70/30, particularly preferably 30/70 to 60/40, in view of the strength of a molded article of a composite material, for example.

When the composite material contains catalysts, the catalyst content relative to the matrix resin is preferably 0.01 to 10 wt%, more preferably 0.1 to 5 wt%, particularly preferably 1 to 3 wt%, in view of the strength of a molded article of a composite material, for example.

The composite material can be produced by impregnating the fiber bundle and/or fiber product with a thermally melted (preferred melting temperature: 60°C to 350°C) matrix resin or a matrix resin diluted with a solvent (e.g., acetone, methyl ethyl ketone, methyl isobutyl ketone, toluene, xylene, or ethyl acetate). When the solvent is used, preferably, the solvent is removed by drying prepreg.

In the composite material of the present invention, when the matrix resin is a thermoplastic resin, prepreg may be heat-molded and solidified at room temperature to form a molded article.

In the composite material of the present invention, when the matrix resin is a thermosetting resin, prepreg may be heat-molded and cured to form a molded article.

Although these resins are not required to be completely cured, preferably, they are cured to an extent that allows the resulting molded article to maintain its shape. The molded article may be further heated to be completely cured.

The heat-molding method is not limited. Examples thereof include a filament winding molding method (a heat-molding method that includes coiling filaments around a rotating mandrel while applying a tension thereto), a press molding method (a heat-molding method that includes laminating prepreg sheets), an autoclaving method (a heat-molding method that includes applying a pressure to push a prepreg sheet into a mold), and a method of mixing chopped fibers or milled fibers with a matrix resin and injection-molding the mixture.

### EXAMPLES

Hereinafter, the present invention is described in further detail with reference to Examples, but the present invention is not limited thereto. Hereinafter, "%" means "wt%", and "part(s)" means part(s) by weight, unless otherwise specified.

### <Production Example 1> [Synthesis of adduct of 4 mol of EO with 3,5,5-trimethyl-1-hexanol (A-1)]

A pressure-resistant reaction vessel equipped with a stirrer, a heating and cooling device, and a dropping funnel was charged with 3,5,5-trimethyl-1-hexanol (144 parts (1 mol part)) and aluminum perchlorate nonahydrate (1 part (0.002 mol parts)). After purging with nitrogen, the reaction vessel was sealed, and the temperature was raised to 70°C for dehydration under reduced pressure for 1 hour. The temperature was raised to 80°C, and EO (88 parts (2 mol parts)) was added dropwise over 10 hours while the pressure was adjusted to 0.2 MPaG or lower. Subsequently, the resulting product was aged at 95°C for 5 hours. Then, after cooling to 70°C, the reaction vessel was charged with an adsorption treatment agent "KYOWAAD 600" available from Kyowa Chemical Industry Co., Ltd. (10 parts). After stirring at 70°C for 1 hour, the adsorption treatment agent was filtered, whereby an adduct of 2 mol of EO with 3,5,5-trimethyl-1-hexanol was obtained.

The resulting adduct of 2 mol of EO with 3,5,5-trimethyl-1-hexanol was mixed with potassium hydroxide (0.1 parts). Then, after purging with nitrogen, the reaction vessel was sealed, and the temperature was raised to 70°C for dehydration under reduced pressure for 1 hour. The temperature was raised to 140°C, and EO (88 parts (2 mol parts)) was added dropwise over 3 hours while the pressure was adjusted to 0.5 MPaG or lower. Subsequently, the resulting product was aged at 140°C for 2 hours. Then, after cooling to 70°C, the reaction vessel was charged with an adsorption treatment agent "KYOWAAD 600" available from Kyowa Chemical Industry Co., Ltd. (10 parts). After stirring at 70°C for 1 hour, the adsorption treatment agent was filtered, whereby an adduct of 4 mol of EO with 3,5,5-trimethyl-1-hexanol (A-1) was obtained.

The adduct of 4 mol of EO with 3,5,5-trimethyl-1-hexanol (A-1) was a compound represented by the formula (1), wherein R¹ was a 3,5,5-trimethylhexan-1-yl group (number of methyl groups: 4), AO was an ethyleneoxy group, and m (number average number of moles of alkylene oxide added) was 4.

### <Production Example 2> [Synthesis of adduct of 6 mol of EO with 3,5,5-trimethyl-1-hexanol (A-2)]

Production Example 1 was repeated except that the amount of EO added for the second time was changed from 88 parts (2 mol parts) to 176 parts (4 mol parts), whereby an adduct of 6 mol of EO with 3,5,5-trimethyl-1-hexanol (A-2) was obtained.

The adduct of 6 mol of EO with 3,5,5-trimethyl-1-hexanol (A-2) was a compound represented by the formula (1), wherein R¹ was a 3,5,5-trimethylhexan-1-yl group (number of methyl groups: 4), AO was an ethyleneoxy group, and m (number average number of moles of alkylene oxide added) was 6.

### <Production Example 3> [Synthesis of adduct of 8 mol of EO with 3,5,5-trimethyl-1-hexanol (A-3)]

Production Example 1 was repeated except that the amount of EO added for the second time was changed from 88 parts (2 mol parts) to 264 parts (6 mol parts), whereby an adduct of 8 mol of EO with 3,5,5-trimethyl-1-hexanol (A-3) was obtained.

The adduct of 8 mol of EO with 3,5,5-trimethyl-1-hexanol (A-3) was a compound represented by the formula (1), wherein R¹ was a 3,5,5-trimethylhexan-1-yl group (number of methyl groups: 4), AO was an ethyleneoxy group, and m (number average number of moles of alkylene oxide added) was 8.

### <Production Example 4> [Synthesis of adduct of 1 mol of PO and 3 mol of EO with Decanol (A-4)]

A pressure-resistant reaction vessel equipped with a stirrer, a heating and cooling device, and a dropping funnel was charged with "Decanol" available from KH Neochem Co. (158 parts (1 mol part)) and potassium hydroxide (0.5 parts (0.009 mol parts)). After purging with nitrogen, the reaction vessel was sealed, and the temperature was raised to 70°C for dehydration under reduced pressure for 1 hour. The temperature was raised to 160°C, and 1,2-propylene oxide (58 parts (1 mol part)) and then EO (132 parts (3 mol parts)) were added dropwise over 5 hours while the pressure was adjusted to 0.5 MPaG or lower. Subsequently, the resulting product was aged at 160°C for 2 hours. Then, after cooling to 70°C, the reaction vessel was charged with an adsorption treatment agent "KYOWAAD 600" available from Kyowa Chemical Industry Co., Ltd. (10 parts). After stirring at 70°C for 1 hour, the adsorption treatment agent was filtered, whereby an adduct of 1 mol of PO and 3 mol of EO with Decanol (A-4) was obtained.

The adduct of 1 mol of PO and 3 mol of EO with Decanol (A-4) was a compound represented by the formula (1), wherein R¹ was a decyl group, AOs were an ethyleneoxy group and a propyleneoxy group, and m (number average number of moles of alkylene oxide added) was 4.

As a result of analysis by ¹H-NMR and gas chromatography, Decanol available from KH Neochem Co. used as a raw material was determined to be an alcohol having a hydroxy group bonded to the R¹. The carbon number of R¹ was 10, and the number average number of methyl groups in R¹ was 3.5 in one molecule.

### <Production Example 5> [Synthesis of adduct of 6 mol of EO with Decanol (A-5)]

A pressure-resistant reaction vessel equipped with a stirrer, a heating and cooling device, and a dropping funnel was charged with "Decanol" available from KH Neochem Co. (158 parts (1 mol part)) and potassium hydroxide (0.5 parts (0.009 mol parts)). After purging with nitrogen, the reaction vessel was sealed, and the temperature was raised to 70°C for dehydration under reduced pressure for 1 hour. The temperature was raised to 160°C, and EO (264 parts (6 mol parts)) was added dropwise over 5 hours while the pressure was adjusted to 0.5 MPaG or lower. Subsequently, the resulting product was aged at 160°C for 2 hours. Then, after cooling to 70°C, the reaction vessel was charged with an adsorption treatment agent "KYOWAAD 600" available from Kyowa Chemical Industry Co., Ltd. (10 parts). After stirring at 70°C for 1 hour, the adsorption treatment agent was filtered, whereby an adduct of 6 mol of EO with Decanol (A-5) was obtained.

The adduct of 6 mol of EO with Decanol (A-5) was a compound represented by the formula (1), wherein R¹ was a decyl group, AO was an ethyleneoxy group, and m (number average number of moles of alkylene oxide added) was 6.

As a result of analysis by ¹H-NMR and gas chromatography, Decanol available from KH Neochem Co. used as a raw material was determined to be an alcohol having a hydroxy group bonded to the R¹. The carbon number of R¹ was 10, and the number average number of methyl groups in R¹ was 3.5 in one molecule.

### <Production Example 6> [Synthesis of adduct of 6 mol of EO with nonanol (A-6)]

Production Example 5 was repeated except that "Decanol" (158 parts (1 mol part)) was changed to "Exxal 9S" (nonanol, available from Exxon Mobil Corporation) (144 parts (1 mol part)), whereby an adduct of 6 mol of EO with nonanol (A-6) was obtained.

The adduct of 6 mol of EO with nonanol (A-6) was a compound represented by the formula (1), wherein R¹ was a nonyl group, AO was an ethyleneoxy group, and m (number average number of moles of alkylene oxide added) was 6.

As a result of analysis by ¹H-NMR and gas chromatography, Exxal 9S available from Exxon Mobil Corporation used as a raw material was determined to be an alcohol having a hydroxy group bonded to the R¹. The carbon number of R¹ was 9.0, and the number average number of methyl groups in R¹ was 3.0 in one molecule.

### <Production Example 7> [Synthesis of adduct of 10 mol of EO with undecanol (A-7)]

Production Example 5 was repeated except that "Decanol" (158 parts (1 mol part)) was changed to "Exxal 11S" (undecanol, available from Exxon Mobil Corporation) (172 parts (1 mol part)) and that the amount of EO was changed from 264 parts (6 mol parts) to 440 parts (10 mol parts), whereby an adduct of 10 mol of EO with undecanol (A-7) was obtained.

The adduct of 10 mol of EO with undecanol (A-7) was a compound represented by the formula (1), wherein R¹ was an undecyl group, AO was an ethyleneoxy group, and m (number average number of moles of alkylene oxide added) was 10.

As a result of analysis by ¹H-NMR and gas chromatography, Exxal 11S available from Exxon Mobil Corporation used as a raw material was determined to be an alcohol having a hydroxy group bonded to the R¹. The carbon number of R¹ was 11.0, and the number average number of methyl groups in R¹ was 3.7 in one molecule.

### <Production Example 8> [Synthesis of adduct of 6 mol of EO with undecanol (A-8)]

Production Example 5 was repeated except that "Decanol" (158 parts (1 mol part)) was changed to "Exxal 11S" (undecanol, available from Exxon Mobil Corporation) (172 parts (1 mol part)), whereby an adduct of 6 mol of EO with undecanol (A-8) was obtained.

The adduct of 6 mol of EO with undecanol (A-8) was a compound represented by the formula (1), wherein R¹ was an undecyl group, AO was an ethyleneoxy group, and m (number average number of moles of alkylene oxide added) was 6.

As a result of analysis by ¹H-NMR and gas chromatography, Exxal 11S available from Exxon Mobil Corporation used as a raw material was determined to be an alcohol having a hydroxy group bonded to the R¹. The carbon number of R¹ was 11.0, and the number average number of methyl groups in R¹ was 3.7 in one molecule.

### <Production Example 9> [Synthesis of adduct of 10 mol of EO with 6-methyl-2-heptanol (A-9)]

Production Example 5 was repeated except that "Decanol" (158 parts (1 mol part)) was changed to 6-methyl-2-heptanol (130 parts (1 mol part)) and that the amount of EO was changed from 264 parts (6 mol parts) to 440 parts (10 mol parts), whereby an adduct of 10 mol of EO with 6-methyl-2-heptanol (A-9) was obtained.

The adduct of 10 mol of EO with 6-methyl-2-heptanol (A-9) was a compound represented by the formula (1), wherein R¹ was a 6-methylheptan-2-yl group (number of methyl groups: 3), AO was an ethyleneoxy group, and m (number average number of moles of alkylene oxide added) was 10.

### <Production Example 10> [Synthesis of adduct of 5 mol of EO with 6-methyl-2-heptanol (A-10)]

Production Example 5 was repeated except that "Decanol" (158 parts (1 mol part)) was changed to 6-methyl-2-heptanol (130 parts (1 mol part)) and that the amount of EO was changed from 264 parts (6 mol parts) to 220 parts (5 mol parts), whereby an adduct of 5 mol of EO with 6-methyl-2-heptanol (A-10) was obtained.

The adduct of 5 mol of EO with 6-methyl-2-heptanol (A-10) was a compound represented by the formula (1), wherein R¹ was a 6-methylheptan-2-yl group (number of methyl groups: 3), AO was an ethyleneoxy group, and m (number average number of moles of alkylene oxide added) was 5.

### <Production Example 11> [Synthesis of adduct of 3 mol of EO with 6-methyl-2-heptanol (A-11)]

Production Example 5 was repeated except that "Decanol" (158 parts (1 mol part)) was changed to 6-methyl-2-heptanol (130 parts (1 mol part)) and that the amount of EO was changed from 264 parts (6 mol parts) to 132 parts (3 mol parts), whereby an adduct of 3 mol of EO with 6-methyl-2-heptanol (A-11) was obtained.

The adduct of 3 mol of EO with 6-methyl-2-heptanol (A-11) was a compound represented by the formula (1), wherein R¹ was a 6-methylheptan-2-yl group (number of methyl groups: 3), AO was an ethyleneoxy group, and m (number average number of moles of alkylene oxide added) was 3.

### <Production Example 12> [Synthesis of adduct of 3 mol of EO with nonanol (A-12)]

Production Example 5 was repeated except that "Decanol" (158 parts (1 mol part)) was changed to "Exxal 9S" (nonanol) available from Exxon Mobil Corporation (144 parts (1 mol part)) and that the amount of EO was changed from 264 parts (6 mol parts) to 132 parts (3 mol parts), whereby an adduct of 3 mol of EO with nonanol (A-12) was obtained.

The adduct of 3 mol of EO with nonanol (A-12) was a compound represented by the formula (1), wherein R¹ was a nonyl group, AO was an ethyleneoxy group, and m (number average number of moles of alkylene oxide added) was 3.

As a result of analysis by ¹H-NMR and gas chromatography, Exxal 9S available from Exxon Mobil Corporation used as a raw material was determined to be an alcohol having a hydroxy group bonded to the R¹. The carbon number of R¹ was 9.0, and the number average number of methyl groups in R¹ was 3.0 in one molecule.

### <Production Example 13> [Synthesis of adduct of 10 mol of EO with 3,5,5-trimethyl-1-hexanol (A-13)]

Production Example 5 was repeated except that "Decanol" (158 parts (1 mol part)) was changed to 3,5,5-trimethyl-1-hexanol (144 parts (1 mol part)) and that the amount of EO was changed from 264 parts (6 mol parts) to 440 parts (10 mol parts), whereby an adduct of 10 mol of EO with 3,5,5-trimethyl-1-hexanol (A-13) was obtained.

The adduct of 10 mol of EO with 3,5,5-trimethyl-1-hexanol (A-13) was a compound represented by the formula (1), wherein R¹ was a 3,5,5-trimethylhexan-1-yl group (number of methyl groups: 4), AO was an ethyleneoxy group, and m (number average number of moles of alkylene oxide added) was 10.

### <Production Example 14> [Synthesis of adduct of 6 mol of EO with β-citronellol (A-14)]

Production Example 5 was repeated except that "Decanol" (158 parts (1 mol part)) was changed to β-citronellol (156 parts (1 mol part)), whereby an adduct of 6 mol of EO with β-citronellol (A-14) was obtained.

The adduct of 6 mol of EO with β-citronellol (A-14) was a compound represented by the formula (1), wherein R¹ was a 3,7-dimethyl-6-octen-1-yl group (number of methyl groups: 3), AO was an ethyleneoxy group, and m (number average number of moles of alkylene oxide added) was 6.

### <Production Example 15> [Synthesis of adduct of 6 mol of EO with 4-tert-butylcyclohexanol (A-15)]

Production Example 5 was repeated except that "Decanol" (158 parts (1 mol part)) was changed to 4-tert-butylcyclohexanol (156 parts (1 mol part)), whereby an adduct of 6 mol of EO with 4-tert-butylhexanol (A-15) was obtained.

The adduct of 6 mol of EO with 4-tert-butylhexanol (A-15) was a compound represented by the formula (1), wherein R¹ was a 4-tert-butylcyclohexan-1-yl group (number of methyl groups: 3), AO was an ethyleneoxy group, and m (number average number of moles of alkylene oxide added) was 6.

### <Comparative Production Example 1> [Synthesis of adduct of 5 mol of EO with 1-hexanol (A'-1)]

Production Example 5 was repeated except that "Decanol" (158 parts (1 mol part)) was changed to n-hexanol (102 parts (1 mol part)) and that the amount of EO was changed from 264 parts (6 mol parts) to 220 parts (5 mol parts)), whereby an adduct of 5 mol of EO with 1-hexanol (A'-1) was obtained.

The adduct of 5 mol of EO with 1-hexanol (A'-1) was a compound represented by the following formula (2), wherein R² was an n-hexyl group (number of methyl groups: 1), AO was an ethyleneoxy group, and m (number average number of moles of alkylene oxide added) was 5:

R²O(AO)ₘH (2),

in the formula (2), R² is an aliphatic hydrocarbon group; AO is a C2-C4 alkyleneoxy group; and m represents the number average number of moles of alkylene oxide added.

### <Comparative Production Example 2> [Synthesis of adduct of 2 mol of PO and 1 mol of EO with 2-ethylhexanol (A'-2)]

Production Example 4 was repeated except that "Decanol" (158 parts (1 mol part)) was changed to 2-ethylhexanol (130 parts (1 mol part)), that 1,2-propylene oxide (58 parts (1 mol part)) was changed to 1,2-propylene oxide (116 parts (2 mol parts)), and that the amount of EO was changed from 132 parts (3 mol parts) to 44 parts (1 mol part), whereby an adduct of 2 mol of PO and 1 mol of EO with 2-ethylhexanol (A'-2) was obtained.

The adduct of 2 mol of PO and 1 mol of EO with 2-ethylhexanol (A'-2) was a compound represented by the formula (2), wherein R² was a 2-ethylhexyl group (number of methyl groups: 2), AOs were an ethyleneoxy group and a propyleneoxy group, and m (number average number of moles of alkylene oxide added) was 3.

### <Comparative Production Example 3> [Synthesis of adduct of 8 mol of EO with 2-ethylhexanol (A'-3)]

Production Example 5 was repeated except that "Decanol" (158 parts (1 mol part)) was changed to 2-ethylhexanol (130 parts (1 mol part)) and that the amount of EO was changed from 264 parts (6 mol parts) to 352 parts (8 mol parts), whereby an adduct of 8 mol of EO with 2-ethylhexanol (A'-3) was obtained.

The adduct of 8 mol of EO with 2-ethylhexanol (A'-3) was a compound represented by the formula (2), wherein R² was a 2-ethylhexyl group (number of methyl groups: 2), AO was an ethyleneoxy group, and m (number average number of moles of alkylene oxide added) was 8.

### <Comparative Production Example 4> [Synthesis of adduct of 7 mol of EO with n-dodecyl alcohol (A'-4)]

Production Example 5 was repeated except that "Decanol" (158 parts (1 mol part)) was changed to an n-dodecyl alcohol (186 parts (1 mol part)) and that the amount of EO was changed from 264 parts (6 mol parts) to 308 parts (7 mol parts), whereby an adduct of 7 mol of EO with n-dodecyl alcohol (A'-4) was obtained.

The adduct of 7 mol of EO with n-dodecyl alcohol (A'-4) was a compound represented by the formula (2), wherein R² was an n-dodecyl group (number of methyl groups: 1), AO was an ethyleneoxy group, and m (number average number of moles of alkylene oxide added) was 7.

### <Comparative Production Example 5> [Synthesis of adduct of 6 mol of EO with 2,4-dimethyl-3-pentanol (A'-5)]

Production Example 5 was repeated except that "Decanol" (158 parts (1 mol part)) was changed to 2,4-dimethyl-3-pentanol (116 parts (1 mol part)), whereby an adduct of 6 mol of EO with 2,4-dimethyl-3-pentanol (A'-5) was obtained.

The adduct of 6 mol of EO with 2,4-dimethyl-3-pentanol (A'-5) was a compound represented by the formula (2), wherein R² was a 2,4-dimethylpentan-3-yl group (number of methyl groups: 4), AO was an ethyleneoxy group, and m (number average number of moles of alkylene oxide added) was 6.

### <Comparative Production Example 6> [Synthesis of adduct of 7 mol of EO with 2,6,8-trimethyl-4-nonanol (A'-6)]

Production Example 5 was repeated except that "Decanol" (158 parts (1 mol part)) was changed to 2,6,8-trimethyl-4-nonanol (186 parts (1 mol part)) and that the amount of EO was changed from 264 parts (6 mol parts) to 308 parts (7 mol parts), whereby an adduct of 7 mol of EO with 2,6,8-trimethyl-4-nonanol (A'-6) was obtained.

The adduct of 7 mol of EO with 2,6,8-trimethyl-4-nonanol (A'-6) was a compound represented by the formula (2), wherein R² was a 2,6,8-trimethylnonan-4-yl group (number of methyl groups: 5), AO was an ethyleneoxy group, and m (number average number of moles of alkylene oxide added) was 7.

### <Comparative Production Example 7> [Synthesis of adduct of 2 mol of EO with 3,5,5-trimethyl-1-hexanol (A'-7)]

Production Example 5 was repeated except that "Decanol" (158 parts (1 mol part)) was changed to 3,5,5-trimethyl-1-hexanol (144 parts (1 mol part)) and the amount of EO was changed from 264 parts (6 mol parts) to 88 parts (2 mol parts), whereby an adduct of 2 mol of EO with 3,5,5-trimethyl-1-hexanol (A'-7) was obtained.

The adduct of 2 mol of EO with 3,5,5-trimethyl-1-hexanol (A'-7) was a compound represented by the formula (2), wherein R² was a 3,5,5-trimethylhexan-1-yl group (number of methyl groups: 4), AO was an ethyleneoxy group, and m (number average number of moles of alkylene oxide added) was 2.

### <Comparative Production Example 8> [Synthesis of adduct of 11 mol of EO with 3,5,5-trimethyl-1-hexanol (A'-8)]

Production Example 5 was repeated except that "Decanol" (158 parts (1 mol part)) was changed to 3,5,5-trimethyl-1-hexanol (144 parts (1 mol part)) and that the amount of EO was changed from 264 parts (6 mol parts) to 484 parts (11 mol parts), whereby an adduct of 11 mol of EO with 3,5,5-trimethyl-1-hexanol (A'-8) was obtained.

The adduct of 11 mol of EO with 3,5,5-trimethyl-1-hexanol (A'-8) was a compound represented by the formula (2), wherein R² was a 3,5,5-trimethylhexan-1-yl group (number of methyl groups: 4), AO was an ethyleneoxy group, and m (number average number of moles of alkylene oxide added) was 11.

### <Comparative Production Example 9> [Synthesis of adduct of 7 mol of PO and 7 mol of EO with isobutyl alcohol (A'-9)]

A pressure-resistant reaction vessel equipped with a stirrer, a heating and cooling device, and a dropping funnel was charged with isobutyl alcohol (74 parts (1 mol part)) and potassium isobutyrate (0.5 parts). After purging with nitrogen, the reaction vessel was sealed, and the temperature was raised to 130°C. 1,2-Propylene oxide (406 parts (7 mol parts)) and then EO (308 parts (7 mol parts)) were added dropwise over 5 hours while the pressure was adjusted to 0.5 MPaG or lower. Subsequently, the resulting product was aged at 160°C for 2 hours. Then, after cooling to 70°C, the reaction vessel was charged with an adsorption treatment agent "KYOWAAD 600" available from Kyowa Chemical Industry Co., Ltd. (10 parts). After stirring at 70°C for 1 hour, the adsorption treatment agent was filtered, whereby an adduct of 7 mol of PO and 7 mol of EO with isobutyl alcohol (A'-9) was obtained.

The adduct of 7 mol of PO and 7 mol of EO with isobutyl alcohol (A'-9) was a compound represented by the formula (2), wherein R² was an isobutyl group (number of methyl groups: 2), AOs were an ethyleneoxy group and a propyleneoxy group, and m (number average number of moles of alkylene oxide added) was 14.

### <Production Example 16: Production of adduct of 40 mol of EO with bisphenol A (b1-1) >

A pressure-resistant reaction vessel equipped with a stirrer, a heating and cooling device, and a dropping funnel was charged with an adduct of 4 mol of EO 4 mol with bisphenol A "NEWPOL BPE-40" available from Sanyo Chemical Industries, Ltd. (404 parts by weight (1 mol part)) and potassium hydroxide (2 parts by weight). After purging with nitrogen, the pressure was adjusted to -0.08 MPa. The temperature was raised to 130°C, and EO (1584 parts by weight (36 mol parts)) was added dropwise over 6 hours while the pressure was adjusted to 0.5 MPaG or lower. Subsequently, the resulting product was aged at 130°C for 3 hours. Then, after cooling to 100°C, the reaction vessel was charged with an adsorption treatment agent "KYOWAAD 600" available from Kyowa Chemical Industry Co., Ltd. (30 weight parts). After stirring at 100°C for 1 hour, the adsorption treatment agent was filtered, whereby an adduct of 40 mol of EO with bisphenol A (b1-1) was obtained.

### <Production Example 17: Production of polyester (B1-1)>

An adduct of 2 mol of EO with bisphenol A "NEWPOL BPE-20" available from Sanyo Chemical Industries, Ltd. (b1-2) (316 parts by weight (1 mol part)), an adduct of 40 mol of EO with bisphenol A (b1-1) (1761 parts by weight (0.89 mol parts)), terephthalic acid (a-1) (113 parts by weight (0.68 mol parts)), and potassium titanate oxalate (5 parts by weight) were reacted in a glass reaction vessel at 230°C for 15 hours with a pressure reduced to 0.001 MPa while water was distilled off, whereby a polyester (B1-1) (2177 parts by weight) was obtained.

### Examples 1 to 22 and Comparative Examples 1 to 10

A reaction vessel equipped with a stirrer, a heating and cooling device, a thermometer, and a dropping funnel was charged with the aliphatic alcohol alkylene oxide adduct (A), the polyester (B1-1), an emulsion containing polyurethane (B2-1), an epoxy group-containing compound (B3-1), an epoxy group-containing compound (B3-2), a (meth)acryloyl group-containing compound (B4-1), a polyether compound (B5-1), and a polyether compound (B5-2) in the amounts (parts by weight) shown in Table 1, followed by stirring for 5 minutes under heating. Subsequently, water was dropped through the dropping funnel over 1 hour, whereby a dispersion of a fiber sizing agent composition having a solids concentration of 1.5 wt% was produced.

Here, the term "solids" means a material remaining after drying a sample (1 g) by heating in a circulation dryer at 130°C for 45 minutes.

The compounds listed in "Compound (B)" in Table 1 were as follows.
(B1-1): Polyester produced in Production Example 17
(B2-1): Aqueous dispersion of polyether-based polyurethane (solids concentration: 50 wt%), product name: "PERMARIN GA-500", available from Sanyo Chemical Industries, Ltd.
(B3-1): Condensate of bisphenol A diglycidyl ether and epichlorohydrin, product name: "jER834", available from Mitsubishi Chemical Corporation
(B3-2): Condensate of bisphenol A diglycidyl ether and epichlorohydrin, product name: "jER1001", available from Mitsubishi Chemical Corporation
(B4-1): PEG 1000 diacrylate, product name: "NK Ester A-1000", available from Shin-Nakamura Chemical Co., Ltd.
(B5-1): Adduct of 10 mol of EO with bisphenol A, product name: "NEWPOL BPE-100", available from Sanyo Chemical Industries, Ltd.
(B5-2): Adduct of propylene oxide ethylene oxide with styrenated phenol, product name: "Soprophor 796/P", available from Solvay Nicca, Ltd.

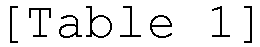

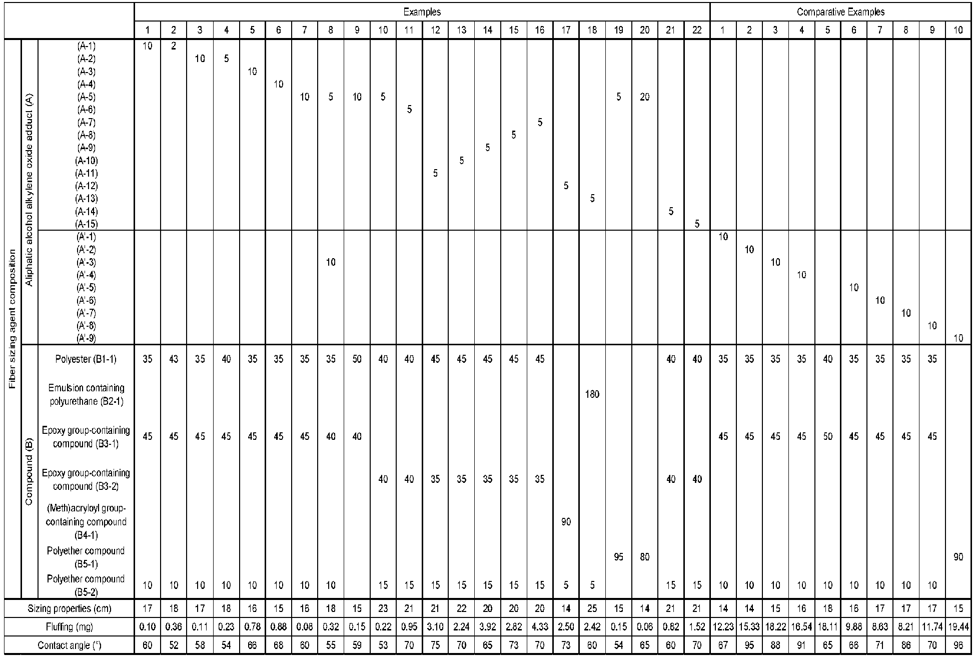

Carbon fiber bundles for test were produced by the following method, using dispersions of the fiber sizing agent compositions obtained Examples 1 to 22 and Comparative Examples 1 to 10, and the sizing properties and fluffing of the carbon fiber bundles and the contact angles of the carbon fiber bundles with epoxy resin were evaluated.

### <Production of carbon fiber bundles for test>

Untreated carbon fibers (number of filaments: 48000) were immersed in the dispersion of the fiber sizing agent composition to impregnate the fibers with the sizing agent. Subsequently, the carbon fibers taken out from the dispersion of the fiber sizing agent composition were dried with hot air at 180°C for 3 minutes, whereby a carbon fiber bundle was produced.

The carbon fiber bundle was produced in such a manner that the amount of solids of the fiber sizing agent composition attached to the fibers was 1.5 wt% (wt% based on the weight of the carbon fibers before immersion).

### <Evaluation of sizing properties>

The sizing properties of the carbon fiber bundle were evaluated in accordance with JIS L1096-2010 8.21.1, Method A (45° cantilever method).

A higher value (cm) indicates better sizing properties.

The carbon fiber bundle obtained under such treatment conditions was evaluated using a cantilever. Generally, the value of sizing properties is preferably 14 cm or more.

### <Evaluation of fluffing>

Fig. 1 is a schematic side view of arrangement of a carbon fiber bundle for evaluation of fluffing.

First, as shown in Fig. 1, a feed roll 2 and a wind-up roll 3 were arranged in such manner that a carbon fiber bundle 4 was wound from the feed roll 2 to the wind-up roll 3. Further, five smooth-surfaced stainless steel rods 1 having a diameter of 10 mm were arranged parallel to one another with a spacing of 50 mm therebetween in a horizontal direction (spacing indicated by the arrow α in Fig. 1) and in a manner that allows the carbon bundle 4 to pass zigzag in contact with each stainless steel rod 1 (hereinafter, for the sake of convenience, these stainless steel rods 1 are referred to as the first to fifth stainless steel rods 1 in order from the one nearest to the feed roll 2).

The stainless steel rods 1 were arranged in such a manner that a straight line connecting the centers of the first, third, and fifth stainless steel rods 1 through which the carbon fiber bundle 4 passes in that order, and a straight line connecting the centers of the second and forth stainless steel rods 1 through which the carbon fiber bundle 4 passes in that order were parallel to the horizontal plane.

The stainless steel rods 1 were also arranged in such a manner that at each of the second to fourth stainless steel rods 1, an angle of 120 degrees was formed between a straight line indicating the direction of travel of the carbon fiber bundle 4 before passing through the stainless steel rod 1 and a straight line indicating the direction of travel of the carbon fiber bundle 4 after passing through the stainless steel rod 1 (for example, in such a manner that an angle of 120 degrees was formed between a straight line indicating the direction of travel of the carbon fiber bundle 4 passing between the first and second stainless steel rods 1 and a straight line indicating the direction of travel of the carbon fiber bundle 4 passing between the second and third stainless steel rods 1).

The carbon fiber bundle 4 was set in a zigzag manner between the stainless steel rods 1, and was sandwiched between two 10 cm × 10 cm sheets of urethane foam under a load of 1 kgf at a position immediately before the wind-up roll 3 (a position indicated by a reference sign 5).

The carbon fiber bundle 4 was wound from the feed roll 2 to the wind-up roll 3 with a winding tension of 1 kg at a speed of 1 m/min.

The weight of fluff attached to these two sheets of urethane foam during winding was measured. A lower value indicates better suppression of fluffing.

### <Contact angle>

The contact angle between carbon fiber filaments and epoxy resin was measured by the Wilhelmy method.

The dynamic advancing contact angle between one carbon fiber filament taken out from each carbon fiber bundle and epoxy resin (a condensate of bisphenol F diglycidyl ether and epichlorohydrin, product name: jER807, available from Mitsubishi Chemical Corporation) (25°C, 1 mm/min) was measured using a contact angle meter "K100SF" available from KRUSS.

A smaller contact angle indicates further improvement in impregnation with the matrix resin when the matrix resin is an epoxy resin, and enhanced strength of a fiber product.

### INDUSTRIAL APPLICABILITY

The fiber sizing agent composition of the present invention is usable as a sizing agent for glass fibers, carbon fibers, aramid fibers, ceramic fibers, metal fibers, mineral fibers, rock fibers, or slag fibers.

In addition, fiber bundles or fiber products treated with the fiber sizing agent composition of the present invention can be used as reinforcing fibers to provide prepreg, with a thermoplastic resin or thermosetting resin as a matrix resin.

### REFERENCE SIGNS LIST

1 stainless steel rod
2 feed roll
3 wind-up roll
4 carbon fiber bundle
5 position for sandwiching by two sheets of urethane foam

## Claims

1. A fiber sizing agent composition comprising:
an aliphatic alcohol alkylene oxide adduct (A) represented by the following formula (1); and
a compound (B),
wherein the compound (B) is at least one selected from the group consisting of a polyester (B1), a polyurethane (B2), an epoxy group-containing compound (B3), a (meth)acryloyl group-containing compound (B4), and a polyether compound (B5) other than the aliphatic alcohol alkylene oxide adduct (A):
R¹O(AO)ₙH (1)
in the formula (1), R¹ is a C8-C11 aliphatic hydrocarbon group having three or more methyl groups; AO is a C2-C4 alkyleneoxy group; and m represents the number average number of moles of alkylene oxide added and is 3 to 10.

2. The fiber sizing agent composition according to claim 1,
wherein an alkyleneoxy group of the aliphatic alcohol alkylene oxide adduct (A) is an ethyleneoxy group.

3. The fiber sizing agent composition according to claim 1 or 2,
wherein the compound (B) is the polyester (B1) and/or the epoxy group-containing compound (B3).

4. A fiber sizing agent dispersion comprising:
the fiber sizing agent composition according to any one of claims 1 to 3 dispersed in water and/or an organic solvent.

5. A fiber sizing agent solution comprising:
the fiber sizing agent composition according to any one of claims 1 to 3 dissolved in water and/or an organic solvent.

6. A fiber bundle comprising (I) or (II):
(I) at least one type of fibers selected from the group consisting of carbon fibers, glass fibers, aramid fibers, ceramic fibers, metal fibers, mineral fibers, and slag fibers, the fibers being treated with the fiber sizing agent composition according to any one of claims 1 to 3; or
(II) at least one type of fibers selected from the group consisting of carbon fibers, glass fibers, aramid fibers, ceramic fibers, metal fibers, mineral fibers, and slag fibers;
an aliphatic alcohol alkylene oxide adduct (A) represented by the following formula (1); and
a compound (B'),
wherein the compound (B') is at least one selected from the group consisting of a polyester (B1), a polyurethane (B2), an epoxy group-containing compound (B3), a (meth)acryloyl group-containing compound (B4), a polyether compound (B5) other than the aliphatic alcohol alkylene oxide adduct (A), a reaction product of the epoxy group-containing compound (B3), and a reaction product of the (meth)acryloyl group-containing compound (B4):
R¹O(AO)ₘH (1)
in the formula (1), R¹ is a C8-C11 aliphatic hydrocarbon group having three or more methyl groups; AO is a C2-C4 alkyleneoxy group; and m represents the number average number of moles of alkylene oxide added and is 3 to 10.

7. A fiber product comprising:
the fiber bundle according to claim 6.

8. A composite material comprising:
the fiber bundle according to claim 6 and/or the fiber product according to claim 7; and
a matrix resin.

## Patentansprüche

1. Faserschlichtungsmittelzusammensetzung, die Folgendes umfasst:
ein aliphatisches Alkoholalkylenoxidaddukt (A), das durch die folgende Formel (1) dargestellt ist; und
eine Verbindung (B),
wobei die Verbindung (B) zumindest eine aus der aus einem Polyester (B1), einem Polyurethan (B2), einer eine Epoxygruppe enthaltenden Verbindung (B3), einer eine (Meth)acryloylgruppe enthaltenden Verbindung (B4) und einer Polyetherverbindung (B5), die sich vom aliphatischen Alkoholalkylenoxidaddukt (A) unterscheidet, bestehenden Gruppe ausgewählte ist:
R¹O(AO)ₘH (1)
wobei in der Formel (1) R¹ eine aliphatische C8-C11-Kohlenwasserstoffgruppe mit drei oder mehr Methylgruppen ist; AO eine C2-C4-Alkylenoxygruppe ist; und m für die zahlenmittlere Anzahl von Mol des hinzugefügten Alkylenoxids steht und 3 bis 10 beträgt.

2. Faserschlichtungsmittelzusammensetzung nach Anspruch 1,
wobei eine Alkylenoxygruppe des aliphatischen Alkoholalkylenoxidaddukts (A) eine Ethylenoxygruppe ist.

3. Faserschlichtungsmittelzusammensetzung nach Anspruch 1 oder 2,
wobei die Verbindung (B) der Polyester (B1) und/oder die eine Epoxygruppe enthaltende Verbindung (B3) ist.

4. Faserschlichtungsmitteldispersion, die Folgendes umfasst:
eine Faserschlichtungsmittelzusammensetzung nach einem der Ansprüche 1 bis 3 in Wasser und/oder einem organischen Lösungsmittel dispergiert.

5. Faserschlichtungsmittellösung, die Folgendes umfasst:
eine Faserschlichtungsmittelzusammensetzung nach einem der Ansprüche 1 bis 3 in Wasser und/oder einem organischen Lösungsmittel gelöst.

6. Faserbündel, das (I) oder (II) umfasst:
(I) zumindest einen Typ von Fasern, der aus der aus Kohlefasern, Glasfasern, Aramidfasern, Keramikfasern, Metallfasern, Mineralfasern und Schlackenfasern bestehenden Gruppe ausgewählt ist, wobei die Fasern mit einer Faserschlichtungsmittelzusammensetzung nach einem der Ansprüche 1 bis 3 behandelt sind; oder
(II) zumindest einen Typ von Fasern, der aus der aus Kohlefasern, Glasfasern, Aramidfasern, Keramikfasern, Metallfasern, Mineralfasern und Schlackenfasern bestehenden Gruppe ausgewählt ist;
ein aliphatisches Alkoholalkylenoxidaddukt (A), das durch die folgende Formel (1) dargestellt ist; und
eine Verbindung (B'),
wobei die Verbindung (B') zumindest eine aus der aus einem Polyester (B1), einem Polyurethan (B2), einer eine Epoxygruppe enthaltenden Verbindung (B3), einer eine (Meth)acryloylgruppe enthaltenden Verbindung (B4) und einer Polyetherverbindung (B5), die sich vom aliphatischen Alkoholalkylenoxidaddukt (A) unterscheidet, einem Reaktionsprodukt der eine Epoxygruppe enthaltenden Verbindung (B3) und einem Reaktionsprodukt der eine (Meth)acryloylgruppe enthaltenden Verbindung (B4) bestehenden Gruppe ausgewählte ist:
R¹O(AO)ₘH (1)
wobei in der Formel (1) R¹ eine aliphatische C8-C11-Kohlenwasserstoffgruppe mit drei oder mehr Methylgruppen ist; AO eine C2-C4-Alkylenoxygruppe ist; und m für die zahlenmittlere Anzahl von Mol des hinzugefügten Alkylenoxids steht und 3 bis 10 beträgt.

7. Faserprodukt, das Folgendes umfasst:
ein Faserbündel nach Anspruch 6.

8. Verbundmaterial, das Folgendes umfasst:
ein Faserbündel nach Anspruch 6 und/oder ein Faserprodukt nach Anspruch 7; und
ein Matrixharz.

## Revendications

1. Composition d'agent d'encollage de fibres, comprenant :
un adduit d'oxyde d'alkylène d'alcool aliphatique (A) représenté par la formule (1) suivante ; et
un composé (B),
dans laquelle le composé (B) est au moins un choisi dans le groupe constitué d'un polyester (B1), d'un polyuréthane (B2), d'un composé contenant un groupe époxy (B3), d'un composé contenant un groupe (méth)acryloyle (B4) et d'un composé de polyéther (B5) autre que l'adduit d'oxyde d'alkylène d'alcool aliphatique (A) :
R₁O(AO)ₘH (1)
dans la formule (1), R¹ est un groupe hydrocarboné aliphatique en C8-C11 présentant trois groupes méthyle ou plus ; AO est un groupe alkylèneoxy en C2-C4 ; et m représente le nombre moyen en nombre de moles d'oxyde d'alkylène ajoutées et est de 3 à 10.

2. Composition d'agent d'encollage de fibres selon la revendication 1, dans laquelle un groupe alkylèneoxy de l'adduit d'oxyde d'alkylène d'alcool aliphatique (A) est un groupe éthylèneoxy.

3. Composition d'agent d'encollage de fibres selon la revendication 1 ou 2, dans laquelle le composé (B) est le polyester (B1) et/ou le composé contenant un groupe époxy (B3).

4. Dispersion d'agent d'encollage de fibres, comprenant :
la composition d'agent d'encollage de fibres selon l'une quelconque des revendications 1 à 3, dispersée dans de l'eau et/ou un solvant organique.

5. Solution d'agent d'encollage de fibres, comprenant :
la composition d'agent d'encollage de fibres selon l'une quelconque des revendications 1 à 3, dissoute dans de l'eau et/ou un solvant organique.

6. Faisceau de fibres, comprenant (I) ou (II) :
(I) au moins un type de fibres choisi dans le groupe comprenant des fibres de carbone, des fibres de verre, des fibres d'aramide, des fibres de céramique, des fibres métalliques, des fibres minérales et des fibres de laitier, les fibres étant traitées avec la composition d'agent d'encollage de fibres selon l'une quelconque des revendications 1 à 3 ; ou
(II) au moins un type de fibres choisi dans le groupe constitué de fibres de carbone, de fibres de verre, de fibres d'aramide, de fibres de céramique, de fibres métalliques, de fibres minérales et de fibres de laitier ;
un adduit d'oxyde d'alkylène d'alcool aliphatique (A) représenté par la formule (1) suivante ; et
un composé (B'),
dans lequel le composé (B') est au moins un choisi dans le groupe constitué d'un polyester (B1), d'un polyuréthane (B2), d'un composé contenant un groupe époxy (B3), d'un composé contenant un groupe (méth)acryloyle (B4), d'un composé de polyéther (B5) autre que l'adduit d'oxyde d'alkylène d'alcool aliphatique (A), d'un produit de réaction du composé contenant un groupe époxy (B3) et d'un produit de réaction du composé contenant un groupe (méth)acryloyle (B4) :
R¹O(AO)ₘH (1)
dans la formule (1), R¹ est un groupe hydrocarboné aliphatique en C8-C11 présentant trois groupes méthyle ou plus ; AO est un groupe alkylèneoxy en C2-C4 ; et m représente le nombre moyen en nombre de moles d'oxyde d'alkylène ajoutées et est de 3 à 10.

7. Produit à base de fibres, comprenant :
le faisceau de fibres selon la revendication 6.

8. Matériau composite, comprenant :
le faisceau de fibres selon la revendication 6 et/ou le produit à base de fibres selon la revendication 7 ; et
une résine de matrice.
